# FASCICULE DE BREVET EUROPEEN

(11) **EP 4 173 530 B1**
(45) Date de publication et mention de la délivrance du brevet: **01.04.2026**
(21) Numéro de dépôt: 22204224.4
(22) Date de dépôt: 27.10.2022
(51) Int. Cl.: A47J 31/44

(54) **MACHINE A CAFE AUTOMATIQUE MUNIE D'UN DISPOSITIF DE MOUSSAGE DE LAIT AMOVIBLE AVEC MAINTIEN AMELIORE**
AUTOMATISCHE KAFFEEMASCHINE MIT ABNEHMBARER MILCHSCHÄUMVORRICHTUNG MIT VERBESSERTER HALTERUNG
AUTOMATIC COFFEE MACHINE PROVIDED WITH A REMOVABLE MILK FOAMING DEVICE WITH IMPROVED HOLDING

(30) Priorité: 28.10.2021 FR 2111492
(43) Date de publication de la demande: 03.05.2023
(73) Titulaire: SEB S.A., 69130 Ecully (FR)
(72) Inventeur: DUTERTRE, Thierry, 69134 Ecully Cedex (FR)
(74) Mandataire: SEB Développement

(56) Documents cités:
- WO-A1-2011/064702
- DE-U1- 212015 000 049
- FR-A1- 3 021 197
- FR-A1- 3 021 199
- FR-A1- 3 021 200

## Description

### Domaine technique

La présente invention concerne le domaine technique général des machines à café automatiques comportant un dispositif de moussage de lait, plus particulièrement un dispositif de moussage de lait agencé de manière amovible pour faciliter son nettoyage.

### Etat de la technique

Il est connu du document EP3878320 une machine à café automatique comportant un dispositif de moussage de lait comprenant une chambre de moussage alimentée par un conduit d'amenée d'eau chaude/vapeur, un conduit d'amenée de lait et un conduit d'amenée d'air. La machine à café automatique comporte une chaudière produisant de l'eau chaude et/ou de la vapeur pour alimenter le conduit d'amenée d'eau chaude/vapeur. Il est également connu de ce type de machine à café automatique, un dispositif de moussage de lait agencé de manière amovible pour faciliter son nettoyage. Ainsi, la machine à café automatique comporte un embout de sortie et la chaudière produit de l'eau chaude et/ou de la vapeur pour alimenter l'embout de sortie. Le dispositif de moussage est mobile selon une direction d'insertion/retrait entre une position accouplée dans laquelle le conduit d'eau chaude/ vapeur est inséré sur l'embout de sortie et une position désaccouplée dans laquelle le conduit d'eau chaude/ vapeur est retiré de l'embout de sortie. Pour que l'utilisateur puisse assez facilement faire passer le dispositif de moussage de la position accouplée à la position désaccouplée, l'effort de maintien en position accouplée est faible. L'effort de maintien est réalisé par les forces de frottement entre le conduit d'eau chaude/ vapeur et l'embout de sortie.

Cependant, la chaudière pendant son fonctionnement pour produire de la vapeur peut générer des surpressions qui tendent à repousser le dispositif de moussage de la position accouplée vers la position désaccouplée et ainsi générer des fuites de vapeur qui perturbent le fonctionnement du dispositif de moussage et qui peuvent être dangereuses pour l'utilisateur. De manière ultime, sous l'effet des surpressions, le dispositif de moussage pourrait être éjecté de la machine à café automatique.

De telles surpressions sont souvent générées au démarrage de la chaudière, au début d'un cycle de moussage de lait.

Les documents FR 3 021 197 A1 et DE 21 2015 000049 U1 donnent d'autres exemples de machines à café comprenant des dispositifs de moussage de lait.

### Résumé de l'invention

La présente invention vise à remédier à ces inconvénients.

Le problème technique à la base de l'invention consiste à proposer une machine à café automatique comportant un dispositif de moussage de lait qui présente un fonctionnement sûr et ergonomique.

Un autre but de l'invention est de proposer une machine à café automatique comportant un dispositif de moussage de lait qui présente une conception simple et économique à mettre en œuvre.

A cet effet, l'invention a pour objet une machine à café automatique comportant les caractéristiques de la revendication 1.

Ainsi, le système de verrouillage s'oppose au désaccouplement du dispositif de moussage lorsque la chaudière, pendant son fonctionnement, produit des surpressions dans le circuit vapeur, notamment au niveau de l'embout de sortie et du conduit d'amenée d'eau chaude/vapeur.

De manière avantageuse, l'embout de sortie est un embout tubulaire de sortie. Avantageusement, le système de verrouillage du dispositif de moussage de lait comporte un moyen de rappel du verrou en position de maintien.

Ainsi, le verrou est repoussé dans la position de maintien de manière automatique.

De préférence, le moyen de rappel comporte un ressort.

Un tel moyen de rappel est particulièrement économique et l'effort de rappel peut être calibrer de manière simple.

De préférence, le dispositif de moussage est mobile selon une direction d'insertion/retrait horizontale.

Ainsi, l'utilisateur peut accoupler/désaccoupler le dispositif de moussage selon un mouvement simple.

Avantageusement, le verrou est mobile selon une direction de verrouillage, perpendiculaire à une direction d'insertion/retrait du dispositif de moussage.

De préférence, le verrou comporte une extrémité libre présentant une forme en V à pointe arrondie dans un plan de coupe parallèle à la direction de verrouillage et parallèle à la direction d'insertion/retrait, le déplacement du verrou étant généré automatiquement par l'insertion ou le retrait du dispositif de moussage.

Ainsi, la forme en V comporte une première paroi inclinée qui coopère avec l'organe de butée pour maintenir le dispositif de moussage dans la position accouplée avec une effort de maintien développé par le ressort. L'utilisateur peut retirer le dispositif de moussage en appliquant, selon la direction d'insertion/retrait, un effort de retrait supérieur à l'effort de maintien. En conséquence, l'insertion ou le retrait du dispositif de moussage sont réalisés sans intervention de l'utilisateur sur le verrou.

Avantageusement, l'extrémité libre présentant la forme en V à pointe arrondie s'étend sur une largeur L supérieure à 5 millimètres.

Une telle largeur L permet au verrou de s'opposer efficacement au désaccouplement du dispositif de moussage.

De préférence, l'organe de butée comporte une extrémité libre arrondie.

Ainsi, le verrou est dans la position de libération lorsque la pointe arrondie de la forme en V est au-dessus de l'extrémité libre arrondie de l'organe de butée.

Lors de l'accouplement du dispositif de moussage, la forme en V comporte une deuxième paroi inclinée qui coopère avec l'extrémité libre arrondie de l'organe de butée pour repousser de manière automatique le verrou en position de libération. Une fois que la pointe arrondie de la forme en V a dépassé l'extrémité libre arrondie de l'organe de butée, le verrou passe dans la position maintien de manière automatique. En conséquence, le déplacement automatique du verrou est généré lors de l'insertion ou du retrait du dispositif de moussage.

De manière avantageuse, le ressort développe un effort de rappel supérieur à 2 N.

De manière avantageuse, la forme en V comporte des première et deuxième parois inclinées qui forment un angle α inférieur à 90°.

Un tel effort de rappel du verrou, combiné avec une telle forme en V, permet de maintenir le verrou en position de maintien et ainsi de s'opposer au désaccouplement du dispositif de moussage sous l'action des surpressions générées par la chaudière, mais permet également à l'utilisateur de retirer assez facilement le dispositif de moussage.

De manière avantageuse, l'organe de butée comporte deux nervures agencées parallèlement.

Une telle disposition permet de réduire les frottements entre le verrou et l'organe de butée.

Le dispositif de moussage est agencé dans une tête de distribution mobile en translation verticale.

Ainsi, la machine à café automatique comporte un dispositif de moussage de lait verrouillable sur la tête de distribution qui est mobile en translation verticale permettant d'ajuster la hauteur des buses de sortie de lait moussé ainsi qu'au moins une buse de sortie de café à la hauteur de la tasse.

Par une tête de distribution, on comprend que la tête de distribution comporte au moins une buse de sortie de café.

De préférence, l'organe de butée est agencé sur le dispositif de moussage et le verrou est agencé sur la tête de distribution.

Ainsi, la majorité du système de verrouillage, notamment le verrou et le ressort, est solidaire de la tête de distribution. Le dispositif de moussage qui est manipulé par l'utilisateur lors du nettoyage ne comporte que l'organe de butée.

De manière avantageuse, l'embout de sortie d'eau chaude/vapeur est relié à la chaudière par un conduit comportant une portion souple.

Ainsi, la portion souple peut se déformer pour autoriser le déplacement de la tête de distribution.

De manière avantageuse, la tête de distribution comporte un logement de réception du dispositif de moussage, le logement comportant une ouverture avant fermée par un capot de fermeture.

De manière avantageuse, la machine à café automatique comporte un embout d'air et une électrovanne pilotée pour alimenter en air l'embout d'air, le dispositif de moussage étant mobile entre la position accouplée dans laquelle le conduit d'amenée d'air est inséré sur l'embout d'air et la position désaccouplée dans laquelle le conduit d'amenée d'air est retiré de l'embout d'air.

Ainsi, l'embout d'air peut être alimenté ou non en air et permettre de réaliser des boissons à base de lait moussé ou de lait chaud non moussé.

De manière avantageuse, l'embout d'air est relié à l'électrovanne par un circuit d'air comportant une portion souple.

Ainsi, la portion souple du circuit d'air peut se déformer pour autoriser le déplacement de la tête de distribution.

De manière avantageuse, l'embout de sortie d'eau chaude/vapeur et l'embout d'air sont agencés côte-à-côte, dans un plan horizontal, le verrou étant agencé au-dessus des embouts de sortie d'eau chaude/vapeur et d'air.

De manière avantageuse, le conduit d'amenée d'eau chaude/vapeur comporte une restriction de section formant un système d'aspiration de lait et d'air basé sur l'effet Venturi.

Par l'effet Venturi, on comprend le nom donné à un phénomène de la dynamique des fluides, selon lequel un fluide en écoulement subit une dépression là où la section d'écoulement se rétrécit et là où la vitesse d'écoulement augmente.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une machine à café automatique comportant une tête de distribution munie d'un dispositif de moussage de lait amovible selon un mode particulier de réalisation de l'invention.
La figure 2 est une vue en coupe partielle suivant le plan de coupe vertical suivant la ligne II-II du dispositif de moussage de lait de machine à café automatique de la figure 1.
La figure 3 est une vue de détail en perspective, selon la direction donnée par la flèche III, de la tête de distribution, sans le capot de fermeture, de la machine à café automatique de la figure 1, le système de verrouillage maintenant la dispositif de moussage en position accouplée.
La figure 4 est une vue de détail en perspective de la tête de distribution de la figure 3, la dispositif de moussage étant en position désaccouplée et séparée de la tête de distribution.
La figure 5 est une vue en coupe partielle suivant le plan de coupe vertical suivant la ligne V-V de la tête de distribution de la figure 3.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la machine à café automatique font référence à cette machine reposant sur un plan de travail, en situation d'usage.

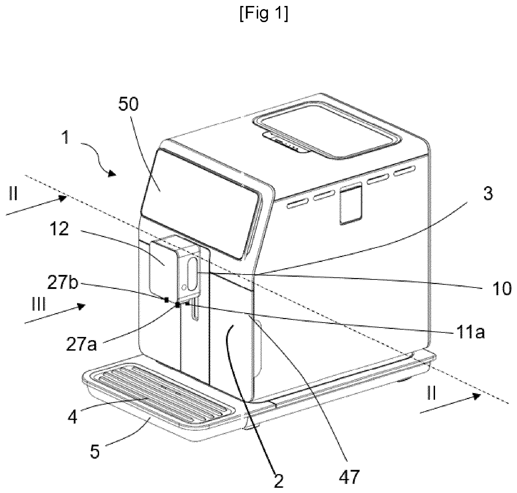

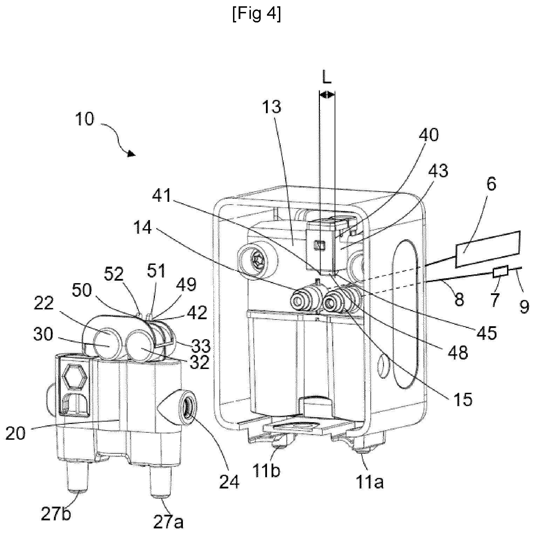

Tel que visible à la figure 1, la machine à café automatique 1 comporte un bâti 3, un support de récipient 4 sur lequel un récipient peut être disposé, et une tête de distribution 10 réglable en hauteur. La tête de distribution 10 comporte deux buses de sortie de café 11a, 11b (Fig. 4). Le support de récipient 4 est agencé au-dessus d'un bac récolte gouttes 5. La tête de distribution 10 est montée coulissante verticalement entre une positon haute dans laquelle l'utilisateur peut déposer une tasse de grande taille sur le repose tasse 4 et une position basse dans laquelle l'utilisateur peut déposer une tasse de petite taille sur le repose tasse 4. La machine à café automatique 1 comporte un circuit de commande 50 pour gérer la réalisation d'une boisson à partir des instructions données par un utilisateur. La machine à café automatique 1 comporte un réservoir 2 formant une réserve en eau froide Le réservoir permet d'alimenter une chaudière instantanée 6 (représentée schématiquement sur la Fig.4) pour produire de l'eau chaude ou de la vapeur.

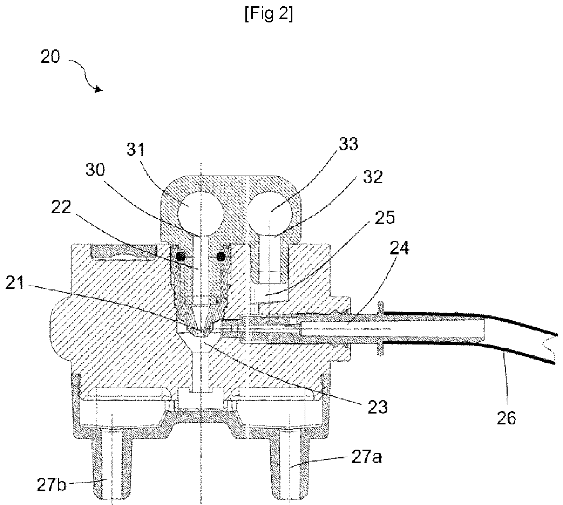

Conformément aux figures 2 à 5, la machine à café automatique 1 comporte un dispositif de moussage 20 de lait agencé dans la tête de distribution 10. La tête de distribution 10 comporte un capot de fermeture 12 (Fig. 1) que l'utilisateur peut retirer pour avoir accès au dispositif de moussage 20. Le dispositif de moussage 20 comporte un système d'aspiration de lait et d'air à effet Venturi à partir d'une alimentation en eau chaude/vapeur issue de la chaudière 6 (Fig. 2). Le système d'aspiration à effet Venturi est formé à partir d'une restriction de section 21 d'un conduit d'amenée de vapeur 22 qui débouche dans une chambre de moussage 23. Le passage du flux de vapeur crée une dépression au niveau de la restriction de section 21. Le dispositif de moussage 20 comporte un conduit d'amenée de lait 24 et un conduit d'amenée d'air 25 qui sont connectés à une sortie de la restriction de section 21 du conduit d'amenée de vapeur 22. Avantageusement, le conduit d'amenée de lait 24 et le conduit d'amenée d'air 25 se rejoignent avant d'atteindre la restriction de section 21 du conduit d'amenée de vapeur 22 pour former un mélange lait/air qui sera ensuite aspiré par le système d'aspiration à effet Venturi. Le conduit d'amenée de lait 24 comporte une portion souple 26 qui est destiné à coopérer avec un récipient contenant du lait. Le dispositif de moussage 20 de lait comporte deux buses de sortie de lait moussé 27a, 27b (Fig.2) agencées à proximité de la buse de sortie de café 11a, 11b.

Tel que visible à la figure 4, la tête de distribution 10 comporte une paroi de fond 13, agencée de manière parallèle au capot de fermeture 12. La tête de distribution 10 comporte un embout de sortie 14 d'eau chaude/vapeur de forme tubulaire. L'embout de sortie 14 d'eau chaude/vapeur est relié à la chaudière 6 (représentée de manière schématique sur la Fig. 4) par un conduit comportant une portion souple pour permettre le déplacement de la tête de distribution 10. L'embout de sortie 14 s'étend horizontalement et dépasse de la paroi de fond 13. La tête de distribution 10 comporte un embout d'air 15 de forme tubulaire et une électrovanne d'air 7 pilotée pour alimenter en air l'embout d'air 15. L'embout d'air 15 s'étend également horizontalement et dépasse de la paroi de fond 13. L'embout d'air est relié à l'électrovanne d'air 7 par un circuit d'air 8 (Fig. 4) pour permettre d'ouvrir ou fermer l'alimentation en air et ainsi pouvoir réaliser des boissons à base de lait moussé ou de lait chaud. Le circuit d'air 8 comporte une portion souple permettant le déplacement de la tête de distribution 10. La fermeture de l'alimentation en air permet également de favoriser l'amorçage du système d'aspiration à effet Venturi, notamment l'aspiration du lait. Le circuit d'air 8 comporte, en amont de l'électrovanne d'air 7 une restriction de section 9 permettant de calibrer la quantité d'air admise dans le système d'aspiration.

Le dispositif de moussage 20 est amovible de la tête de distribution 10. Le dispositif de moussage 20 est mobile selon une direction d'insertion/retrait horizontale. Le dispositif de moussage 20 est mobile entre une position accouplée dans laquelle le conduit d'amenée d'eau chaude/vapeur 22 est inséré sur l'embout de sortie 14 et une position désaccouplée dans laquelle le conduit d'amenée d'eau chaude/vapeur 22 est retiré de l'embout de sortie 14. Dans la position accouplée, le conduit d'amenée d'air 25 est également inséré sur l'embout d'air 15 et dans la position désaccouplée, le conduit d'amenée d'air 25 est également retiré de l'embout d'air 15. Le conduit d'amenée d'eau chaude/vapeur 22 du dispositif de moussage 20 comporte une portion coudée 30 qui comprend une extrémité libre 31 (Fig. 2). L'extrémité libre 31 présente une forme cylindrique ajustée à la forme tubulaire de l'embout de sortie 14. Le conduit d'amenée d'air 25 du dispositif de moussage 20 comporte une portion coudée 32 qui comprend une extrémité libre 33. L'extrémité libre 33 présente une forme cylindrique ajustée à la forme tubulaire de l'embout d'air 25. Dans la position accouplée, le conduit d'amenée d'eau chaude/vapeur 22 et le conduit d'amenée d'air 25 sont insérés de manière étanche sur l'embout de sortie 14 et sur l'embout d'air 15.

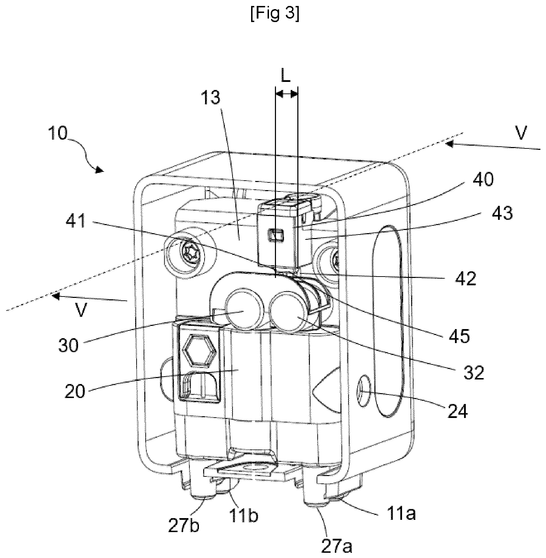

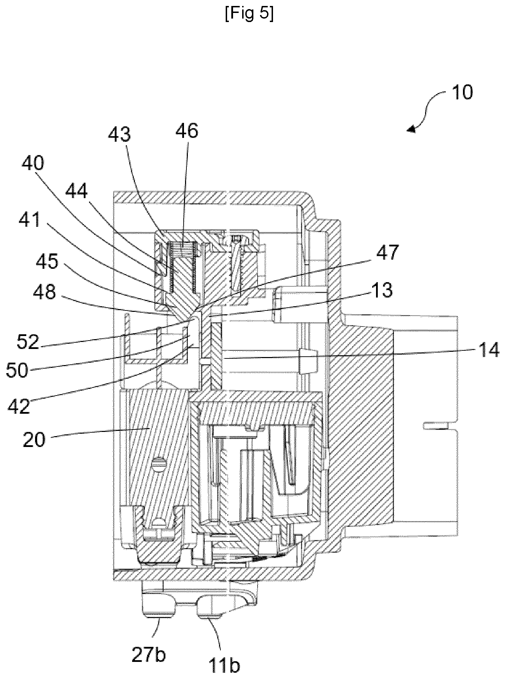

Conformément aux figures 3 à 5, la machine à café automatique 1 comporte un système de verrouillage 40 du dispositif de moussage 20 en position accouplée sur la tête de distribution 10. Le système de verrouillage 40 comporte un verrou 41 assujetti à la tête de distribution 10 et un organe de butée 42 solidaire du dispositif de moussage 20. Le verrou 41 est mobile en translation verticale entre une position de maintien dans laquelle le verrou 41 est engagé derrière l'organe de butée 42, et une position de libération dans laquelle le verrou 41 est écarté de l'organe de butée 42. Le verrou 41 est mobile dans un boitier 43 agencé au-dessus des embouts de sortie 14 d'eau chaude/vapeur et d'air 15. Le verrou 41 comporte un corps cylindrique 44 et une extrémité libre 45 présentant une forme en V à pointe arrondie dans un plan de coupe vertical et parallèle à la direction d'insertion/retrait. Le système de verrouillage 40 comporte un ressort 46 de rappel du verrou 41 en position de maintien (Fig. 5). Le ressort 46 de rappel est agencé autour du corps cylindrique 44. Le ressort 46 développe un effort de rappel égal à 3 N.

L'extrémité libre 45 présentant une forme en V à pointe arrondie s'étend horizontalement, de manière perpendiculaire à la direction d'insertion/retrait du dispositif de moussage 20 sur une largeur L égale à 7 millimètres (Fig. 3). L'extrémité libre 45 présentant une forme en V à pointe arrondie comporte une première paroi inclinée 47 (Fig. 5) qui coopère avec l'organe de butée 42 pour maintenir le dispositif de moussage 20 dans la position accouplée avec un effort de maintien développé par le ressort 46. L'extrémité libre 45 présentant une forme en V à pointe arrondie comporte une deuxième paroi inclinée 48. Les première 47 et deuxième 48 parois inclinées forment un angle α égal à 80°.

L'organe de butée 42 comporte deux nervures 49, 50 agencées parallèlement. Dans la position accouplée, les deux nervures 49, 40 sont agencées de part et d'autre d'un plan de symétrie vertical, parallèle à la direction d'insertion/retrait et passant par un axe du corps cylindrique 44 du verrou 41. Chaque nervure 49, 50 comporte une extrémité libre arrondie 51, 52. Les deux nervures 49, 50 sont agencées au-dessus des extrémités libres 31, 33 des portions coudées 30, 32 du conduit d'amenée d'eau chaude/vapeur 22 et du conduit d'amenée d'air 25.

En fonctionnement, l'utilisateur qui veut démonter le dispositif de moussage 20, notamment pour le nettoyer après une préparation lactée, ôte le capot de fermeture 12 de la tête de distribution 10. Il saisit le dispositif de moussage 20 et le tire horizontalement vers l'extérieur de la machine à café automatique 1. A partir d'un effort supérieur à un effort de maintien du verrou 41, la première paroi inclinée 47 est repoussée vers le haut à l'encontre de la force de rappel du ressort 46 et l'extrémité libre 45 présentant une forme en V à pointe arrondie, notamment la pointe arrondie passe au-dessus des extrémités libres arrondies 51, 52 des deux nervures 49, 50 pour faire prendre au verrou 41 la position de libération. Le conduit d'amenée d'eau chaude/vapeur 22 et le conduit d'amenée d'air 25 sont ensuite complétement retirés des embouts de sortie 14 d'eau chaude/vapeur et d'air 15 pour faire passer le dispositif de moussage 20 dans la position désaccouplée. Une fois le dispositif de moussage 20 nettoyé, l'utilisateur remonte le dispositif de moussage 20 sur la tête de distribution 10. Il insère le conduit d'amenée d'eau chaude/vapeur 22 et le conduit d'amenée d'air 25 sur les embouts de sortie 14 d'eau chaude/vapeur et d'air 15 selon la direction d'insertion/retrait horizontale. La deuxième paroi inclinée 48 coopère avec les extrémités libres arrondies 51, 52 des deux nervures 49, 50 pour repousser de manière automatique le verrou 41 en position de libération. Une fois que l'extrémité libre 45 présentant une forme en V à pointe arrondie, notamment la pointe arrondie, a dépassé les extrémités libres arrondies 51, 52, le verrou 41 passe dans la position de maintien derrière les deux nervures 49, 50 de manière automatique.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, tant que l'on ne sort pas du domaine de protection de l'invention telle que définie par les revendications ci-jointes.

Ainsi, dans une variante de réalisation non illustrée, le verrou 41 est monté mobile en rotation. Le verrou 41 est agencé à une extrémité libre d'une lame ressort.

## Revendications

1. Machine à café automatique (1) comportant un dispositif de moussage (20) de lait comprenant une chambre de moussage (23) alimentée par un conduit d'amenée d'eau chaude/vapeur (22), un conduit d'amenée de lait (24) et un conduit d'amenée d'air (25), la machine à café automatique (1) comportant un embout de sortie (14) d'eau chaude/vapeur et une chaudière (6) produisant de l'eau chaude et/ou de la vapeur pour alimenter ledit embout de sortie (14), le dispositif de moussage (20) étant mobile selon une direction d'insertion/retrait entre une position accouplée dans laquelle le conduit d'amenée d'eau chaude/vapeur (22) est inséré sur l'embout de sortie (14) et une position désaccouplée dans laquelle le conduit d'amenée d'eau chaude/vapeur (22) est retiré de l'embout de sortie (14), ladite machine à café automatique comportant un système de verrouillage (40) du dispositif de moussage (20) de lait en position accouplée, le système de verrouillage (40) comportant un organe de butée (42) et un verrou (41) mobile entre une position de maintien dans laquelle le verrou (41) est engagé derrière l'organe de butée (42), et une position de libération dans laquelle le verrou (41) est écarté de l'organe de butée (42), **caractérisé en ce que** la machine à café comprend une tête de distribution (10) mobile en translation verticale et comprenant l'embout de sortie (14), le dispositif de moussage (20) de lait étant agencé dans la tête de distribution (10).

2. Machine à café automatique (1) selon la revendication 1, **caractérisée en ce que** le système de verrouillage (40) du dispositif de moussage (20) de lait comporte un moyen de rappel (46) du verrou (41) en position de maintien.

3. Machine à café automatique (1) selon la revendication 2, **caractérisée en ce que** le moyen de rappel comporte un ressort (46).

4. Machine à café automatique (1) selon l'une quelconque des revendications 1 à 3, **caractérisée en ce que** le dispositif de moussage (20) est mobile selon une direction d'insertion/retrait horizontale.

5. Machine à café automatique (1) selon l'une quelconque des revendications 1 à 4, **caractérisée en ce que** le verrou (41) est mobile selon une direction de verrouillage, perpendiculaire à une direction d'insertion/retrait du dispositif de moussage.

6. Machine à café automatique (1) selon la revendication 5, **caractérisée en ce que** le verrou (41) comporte une extrémité libre (45) présentant une forme en V à pointe arrondie dans un plan de coupe parallèle à la direction de verrouillage et parallèle à la direction d'insertion/retrait, le déplacement du verrou (41) étant généré automatiquement par l'insertion ou le retrait du dispositif de moussage (20).

7. Machine à café automatique (1) selon la revendication 6, **caractérisée en ce que** l'extrémité libre (45) présentant la forme en V à pointe arrondie s'étend sur une largeur L supérieure à 5 millimètres.

8. Machine à café automatique (1) l'une quelconque des revendications 1 à 7, **caractérisée en ce que** l'organe de butée (42) comporte une extrémité libre arrondie (51, 52)

9. Machine à café automatique (1) selon l'une quelconque des revendications précédentes, **caractérisée en ce que** l'organe de butée (42) est agencé sur le dispositif de moussage (20) et le verrou (41) est agencé sur la tête de distribution (10).

## Patentansprüche

1. Automatische Kaffeemaschine (1), umfassend eine Milchaufschäumvorrichtung (20) mit einer Aufschäumkammer (23), die durch eine Heißwasser/Dampfeinlassleitung (22), eine Milcheinlassleitung (24) und eine Lufteinlassleitung (25) gespeist wird, wobei die automatische Kaffeemaschine (1) über eine Heißwasser/Dampfausgabedüse (14) und einen Boiler (6) verfügt, der Heißwasser und/oder Dampf für die Versorgung der genannten Ausgabedüse (14) erzeugt, wobei die Aufschäumvorrichtung (20) in einer Einschub-/Entfernung Richtung zwischen einer gekoppelten Position, in welcher die Heißwasser/Dampfeinlassleitung (22) mit der Ausgabedüse (14) verbunden ist, und einer entkoppelten Position, in welcher die Heißwasser/Dampfeinlassleitung (22) von der Ausgabedüse (14) getrennt wird, beweglich ist, wobei die automatische Kaffeemaschine über ein Verriegelungssystem (40) für die Milchaufschäumvorrichtung (20) in gekoppelter Position verfügt, das Verriegelungssystem (40) ein Anschlagelement (42) und einen Verriegelungsbolzen (41) umfasst, der zwischen einer Halteposition, in welcher der Verriegelungsbolzen (41) hinter das Anschlagelement (42) greift, und einer Freigabeposition, in welcher der Verriegelungsbolzen (41) vom Anschlagelement (42) entfernt ist, beweglich ist, **dadurch gekennzeichnet, dass** die Kaffeemaschine einen in vertikaler Translation beweglichen Ausgabe Kopf (10) umfasst, der die Ausgabedüse (14) umfasst, wobei die Milchaufschäumvorrichtung (20) im Ausgabe Kopf (10) angeordnet ist.

2. Automatische Kaffeemaschine (1) nach Anspruch 1, **dadurch gekennzeichnet, dass** das Verriegelungssystem (40) der Milchaufschäumvorrichtung (20) ein Rückführungsmittel (46) für den Verriegelungsbolzen (41) in der Halteposition umfasst.

3. Automatische Kaffeemaschine (1) nach Anspruch 2, **dadurch gekennzeichnet, dass** das Rückführungsmittel eine Feder (46) umfasst.

4. Automatische Kaffeemaschine (1) nach einem der Ansprüche 1 bis 3, **dadurch gekennzeichnet, dass** die Aufschäumvorrichtung (20) in einer horizontalen Einschub-/Entfernungsrichtung beweglich ist.

5. Automatische Kaffeemaschine (1) nach einem der Ansprüche 1 bis 4, **dadurch gekennzeichnet, dass** der Verriegelungsbolzen (41) in eine Verriegelungsrichtung beweglich ist, die senkrecht zur Einschub-/Entfernungsrichtung der Aufschäumvorrichtung steht.

6. Automatische Kaffeemaschine (1) nach Anspruch 5, **dadurch gekennzeichnet, dass** der Verriegelungsbolzen (41) ein freies Ende (45) aufweist, das eine abgerundete V-Form in einer Schnittfläche parallel zur Verriegelungsrichtung und parallel zur Einschub-/Entfernungsrichtung aufweist, wobei die Bewegung des Verriegelungsbolzens (41) automatisch durch das Einfügen oder Entfernen der Aufschäumvorrichtung (20) erzeugt wird.

7. Automatische Kaffeemaschine (1) nach Anspruch 6, **dadurch gekennzeichnet, dass** das freie Ende (45) mit der abgerundeten V-Form sich über eine Breite L von mehr als 5 Millimetern erstreckt.

8. Automatische Kaffeemaschine (1) nach einem der Ansprüche 1 bis 7, **dadurch gekennzeichnet, dass** das Anschlagelement (42) ein abgerundetes freies Ende (51, 52) aufweist.

9. Automatische Kaffeemaschine (1) nach einem der vorhergehenden Ansprüche, **dadurch gekennzeichnet, dass** das Anschlagelement (42) auf der Aufschäumvorrichtung (20) angeordnet ist und der Verriegelungsbolzen (41) auf dem Ausgabe Kopf (10) angeordnet ist.

## Claims

1. Automatic coffee machine (1) comprising a milk frothing device (20) with a frothing chamber (23) supplied by a hot water/steam inlet conduit (22), a milk inlet conduit (24), and an air inlet conduit (25), the automatic coffee machine (1) having a hot water/steam outlet nozzle (14) and a boiler (6) producing hot water and/or steam to supply said outlet nozzle (14), the frothing device (20) being movable in an insertion/removal direction between a coupled position in which the hot water/steam inlet conduit (22) is connected to the outlet nozzle (14) and a decoupled position in which the hot water/steam inlet conduit (22) is disconnected from the outlet nozzle (14), said automatic coffee machine comprising a locking system (40) for the milk frothing device (20) in the coupled position, the locking system (40) including a stop element (42) and a lock (41) movable between a holding position in which the lock (41) engages behind the stop element (42) and a release position in which the lock (41) is distanced from the stop element (42), **characterized in that** the coffee machine includes a dispensing head (10) movable in vertical translation comprising the outlet nozzle (14), the milk frothing device (20) being arranged within the dispensing head (10).

2. Automatic coffee machine (1) according to claim 1, **characterized in that** the locking system (40) of the milk frothing device (20) includes a return means (46) for the lock (41) in the holding position.

3. Automatic coffee machine (1) according to claim 2, **characterized in that** the return means includes a spring (46).

4. Automatic coffee machine (1) according to any one of claims 1 to 3, **characterized in that** the frothing device (20) is movable in a horizontal insertion/removal direction.

5. Automatic coffee machine (1) according to any one of claims 1 to 4, **characterized in that** the lock (41) is movable in a locking direction, perpendicular to the insertion/removal direction of the frothing device.

6. Automatic coffee machine (1) according to claim 5, **characterized in that** the lock (41) has a free end (45) featuring a rounded V-shape in a sectional plane parallel to the locking direction and parallel to the insertion/removal direction, the movement of the lock (41) being automatically generated by the insertion or removal of the frothing device (20).

7. Automatic coffee machine (1) according to claim 6, **characterized in that** the free end (45) featuring the rounded V-shape extends over a width L greater than 5 millimeters.

8. Automatic coffee machine (1) according to any one of claims 1 to 7, **characterized in that** the stop element (42) has a rounded free end (51, 52).

9. Automatic coffee machine (1) according to any one of the preceding claims, **characterized in that** the stop element (42) is arranged on the frothing device (20) and the lock (41) is arranged on the dispensing head (10).
